# EUROPEAN PATENT SPECIFICATION

(11) **EP 1 697 621 B1**
(45) Date of publication and mention of the grant of the patent: **20.01.2010**
(21) Application number: 04808072.5
(22) Date of filing: 22.12.2004
(51) Int. Cl.: F01N 3/20, F01N 3/08, F01N 3/28, F02B 37/00

(54) **APPARATUS FOR PURIFYING EXHAUST GAS**
VORRICHTUNG ZUR REINIGUNG VON ABGAS
APPAREIL PERMETTANT DE PURIFIER DES GAZ D'ECHAPPEMENT

(30) Priority: 25.12.2003 JP 2003430922
(43) Date of publication of application: 06.09.2006
(73) Proprietor: Toyota Jidosha Kabushiki Kaisha, Toyota-shi, Aichi-ken, 471-8571 (JP)
(72) Inventor: TAKAGI, Nobuyuki, c/o TOYOTA JIDOSHA K.K., Toyota-shi, Aichi 4718571 (JP); OKAWARA, Seiji, c/o TOYOTA JIDOSHA K.K., Toyota-shi, Aichi 4718571 (JP)
(74) Representative: Kopp, Stephan
(86) International application number: PCT/JP2004/019722
(87) International publication number: WO 2005/064131

(56) References cited:
- WO-A-97/36676
- DE-A1- 10 203 309
- DE-U1- 20 117 873
- FR-A- 2 835 566
- US-A- 3 775 971
- US-A- 5 493 859
- US-A- 6 006 515
- US-A- 6 109 018

## Description

### Technical Field

The present invention relates to an apparatus for purifying an exhaust gas flowing from an internal combustion engine equipped with a turbocharger.

### Background Art

In general, in order to improve the output of internal combustion engines, it is preferable to increase the volume of air-fuel mixture to be charged into the combustion chambers. Accordingly, supercharger systems have been put into practical applications. Supercharger systems not only supply air-fuel mixtures by negative pressures generating accompanied by the descending pistons, but also supply air-fuel mixtures forcibly to the combustion chambers. An example of the supercharger systems is turbochargers which forcibly feed air into the combustion chambers by the energy of exhaust gas flows.

Since the turbochargers exhibit large heat capacities, it is difficult to quickly increase the temperature of catalysts, which are disposed on a downstream side of a flow of exhaust gases with respect to the turbochargers, to the activation temperature in such instances as starting internal combustion engines. Accordingly, it is difficult for the catalysts to demonstrate satisfactory exhaust gas-purifying performance. Hence, Japanese Unexamined Utility Model Publication (KOKAI) No. 59-34,033 proposes to dispose a catalytic apparatus on an upstream side of a flow of exhaust gases with respect to turbochargers. With such an arrangement, it is possible to quickly increase the temperature of catalysts to the activation temperature as well as to heat exhaust gases by heat generated by means of the oxidation reaction of catalysts. Consequently, the conversions of harmful components improve.

Moreover, Japanese Unexamined Patent Publication (KOKAI) No. 11-132, 036 proposes to dispose a catalyst on an upstream side as well as on a downstream side of a flow of exhaust gases with respect to turbochargers, respectively. With such an arrangement as well, it is possible to quickly increase the temperature of the upstream-side catalyst to the activation temperature. Moreover, exhaust gases which are heated by heat generated by means of the oxidation reaction of the upstream-side catalyst flow into the downstream-side catalyst. Accordingly, the temperature of the downstream-side catalyst increases quickly to the activation temperature. Consequently, the conversions of harmful components improve furthermore.

Incidentally, a system has been put into actual application JP 11-107810 A in order to improve NOₓ reducing performance. In such a system, a liquid reducing agent, such as light oil, is added into exhaust gases intermittently, and NOₓ are purified with a downstream-side NOₓ sorbing-and-reducing catalyst. Specifically, in the system, NOₓ are sorbed in the NOₓ sorbing-and-reducing catalyst in fuel-lean atmospheres in which oxygen is present in excess. Then, the atmosphere of exhaust gases is turned into fuel-rich atmospheres by adding the liquid reducing agent into the fuel-lean atmospheres. Thus, the sorbed NOₓ are released from the NOₓ sorbing-and-reducing catalyst, and are purified by reduction with the reducing agent present abundantly.

In the system, however, the temperature of exhaust gases has been decreased, because the liquid reducing agent is added into the exhaust gases. Accordingly, there arises a drawback that the temperature increment of catalysts is furthermore retarded. Consequently, the liquid reducing agent has adhered onto the inlet-end surface of the catalysts, and particulate matters, such as carbonaceous fine particles, sulfuric fine particles like sulfates, and high-molecular-weight hydrocarbon fine particles (hereinafter collectively referred to as "PMs"), have adhered onto the deposited liquid reducing catalyst. As a result, there occurs a problem that the cellular exhaust-gas passages of catalysts have been closed to increase the exhaust pressure loss. In particular, in internal combustion engines equipped with a turbocharger exhibiting a large heat capacity, the turbocharger has amplified the problem because a liquid reducing agent is generally added into air-fuel mixtures on an upstream side of a flow of exhaust gases with respect to the turbocharger.

Moreover, it is possible to think of disposing an oxidizing catalyst on a downstream side of a flow of exhaust gases with respect to the turbocharger in order to vaporize or modify the liquid reducing agent. In this instance, however, in order to apply an oxidizing catalyst to the exhaust gases whose temperatures are decreased by the turbocharger, it is required to enlarge the oxidizing catalyst by prolonging the overall length. Accordingly, there arises a problem associated with limited boarding spaces in vehicles. In addition, even when an oxidizing catalyst is thus disposed, there still remains a problem that not only the liquid reducing agent but also PMs have adhered onto the inlet-end surface of the oxidizing catalyst.
Further, document WO 97/36676 discloses a method and apparatus for reducing harmful emissions from a diesel engine by urea injection. Particularly, emission of NOₓ from diesel engines is reduced by hydrolyzing or otherwise gasifying urea on an as-needed basis. Preferably, an aqueous urea solution is introduced into a catalyzed chamber maintained at least partially in contact with the exhaust system. The heat of the exhaust gases is utilized to gasify the urea. The gaseous breakdown products of the urea are then introduced into the exhaust gases upstream of an SCR catalyst. In one form of the invention, an oxidation catalyst is provided down stream of the SCR catalyst for the purpose of eliminating any ammonia which might otherwise pass through the system and provide an objectionable odor.

### Disclosure of Invention

The present invention has been developed in view of such circumstances. It is therefore an object of the present invention to enhance the vaporization of liquid reducing agents, thereby inhibiting the exhaust gas passages of NOₓ sorbing-and-reducing catalysts, which are disposed on a downstream side of a flow of exhaust gases with respect to turbochargers, from closing. At the same time, it is another object of the present invention to furthermore upgrade the NOₓ purifying performance of apparatuses for purifying exhaust gases.

An apparatus for purifying an exhaust gas according to claim 1 of the present invention solves the aforementioned problems. The apparatus is for purifying an exhaust gas flowing from an internal combustion engine equipped with a turbocharger, comprising:
an injector that injects a liquid reducing agent into the exhaust gas and is disposed on an upstream side of the turbocharger;
a vaporization enhancer that enhances a vaporization of the liquid reducing agent and is disposed between the injector and the turbocharger; and
an NOₓ sorbing-and-reducing catalyst disposed on a downstream side of the turbocharger.

In the present apparatus, the vaporization enhancer comprises an oxidizing catalyst.

The present apparatus comprises the vaporization enhancer disposed between the turbocharger and the injector. The vaporization enhancer enhances the vaporization of the liquid reducing agent which the injector has added into exhaust gases. Accordingly, the vaporization of the liquid reducing agent is enhanced, and thereby the liquid reducing agent is inhibited from adhering onto the inlet-end surface of the NOₓ sorbing-and-reducing catalyst. Consequently, PMs are not only inhibited from adhering onto the liquid reducing agent, and are but also inhibited from enclosing the cellular exhaust-gas passages of the NOₓ sorbing-and-reducing catalyst. Therefore, it is possible to inhibit the exhaust pressure loss from enlarging. Moreover, the NOₓ purifying performance of the present apparatus upgrades, because the usable efficiency is enhanced at the inlet-end portion of the NOₓ sorbing-and-reducing catalyst.

Moreover, when the vaporization enhancer comprises an oxidizing catalyst, it is possible to partially oxidize the liquid reducing agent or hydrocarbons (hereinafter referred to as "HC") in exhaust gases by the oxidizing catalyst. Accordingly, it is possible to purify NOₓ by reduction more efficiently, because partially-oxidized active HC flow into the NOₓ sorbing-and-reducing catalyst. Thus, the NOₓ purifying performance of the present apparatus upgrades furthermore.

In addiction, it is unnecessary to enlarge the NOₓ sorbing-and-reducing catalyst by prolonging the overall length, because the usable efficiency of the NOₓ sorbing-and-reducing catalyst is upgraded. Therefore, the thus downsized present apparatus is less expensive, and can solve the limited boarding spaces in vehicles.

### Brief Description of the Drawing

Fig. 1 is an explanatory diagram for illustrating an overall arrangement of an exhaust gas-purifying apparatus according to the present invention.

Fig. 2 is a perspective view for illustrating an oxidizing catalyst (i.e., vaporization enhancer) used in the exhaust gas-purifying apparatus according to the present invention.

Fig. 3 is an overall explanatory diagram for illustrating a honeycomb-shaped body (i.e., vaporization enhancer) used in an exhaust gas-purifying apparatus according to a further Example not forming part of the present invention.

Fig. 4 is a perspective view for illustrating a corrugated plate of the honeycomb-shaped body (i.e., vaporization enhancer) used in the exhaust gas-purifying apparatus according to said further Example.

Fig. 5 is a cross-sectional view for illustrating the honeycomb-shaped body (i.e., vaporization enhancer) used in the exhaust gas-purifying apparatus according to the Example not forming part of the present invention.

Fig. 6 is a cross-sectional view for illustrating a flow of exhaust gases in the honeycomb-shaped body (i.e., vaporization enhancer) used in the exhaust gas-purifying apparatus according to said Example.

Fig. 7 is another cross-sectional view for illustrating a flow of exhaust gases in the honeycomb-shapedbody (i.e., vaporization enhancer) used in the exhaust gas-purifying apparatus according to said further Example.

Fig. 8 is a bar chart for illustrating saturated NOₓ sorbing amounts exhibited by the exhaust gas-purifying apparatus according to the present invention and exhaust gas-purifying apparatuses according to comparative examples.

Fig. 9 is a bar chart for illustrating emissions exhibited by the exhaust gas-purifying apparatuses according to the present invention and said further Example not forming part of the present invention and the exhaust gas-purifying apparatuses according to comparative examples.

Fig. 10 is a line chart for illustrating the relationship between the overall length of the NOₓ sorbing-and-reducing catalyst used in the exhaust gas-purifying apparatus according to the present invention and the saturated NOₓ sorbing amounts exhibited by the same and that of the exhaust gas-purifying apparatus according to a comparative example.

Fig. 11 is a bar chart for illustrating the temperature of exhaust gases in front of a turbocharger and the temperature of exhaust gases at the rear of the same.

### Best Mode for Carrying out the Invention

The present exhaust gas-purifying apparatus comprises a vaporization enhancer disposed between a turbocharger and an injector. The vaporization enhancer enhances the vaporization of a liquid reducing agent which the injector has added into exhaust gases. Specifically, the added liquid reducing agent is vaporized in a facilitated manner when it passes through the vaporization enhancer. Additionally, the added liquid reducing agent is vaporized more in a furthermore facilitated manner when it is stirred in the turbocharger. Therefore, when the thus vaporized liquid reducing agent flows into the NOₓ sorbing-and-reducing catalyst disposed on a downstream side of a flow of exhaust gases with respect to the turbocharger, the liquid reducing agent hardly adheres onto the inlet-end surface of the NOₓ sorbing-and-reducing catalyst, and accordingly PMs scarcely adhere onto and deposit on the liquid reducing agent.

Thus, it is possible to inhibit the resistance, which is exerted to exhaust gases passing through the NOₓ sorbing-and-reducing catalyst, from increasing. Accordingly, it is possible to inhibit the exhaust pressure loss from enlarging. Moreover, the NOₓ purifying performance upgrades, because the usable efficiency is enhanced at the inlet-end portion of the NOₓ sorbing-and-reducing catalyst.

As for the vaporization enhancer, it is preferable to use oxidizing catalysts. When a liquid reducing agent passes through an oxidizing catalyst together with high-temperature exhaust gases, the liquid reducing agent is oxidized partially to turn into low-molecular-weight HC so that the vaporization is furthermore facilitated. Moreover, the NOₓ purifying conversion of the NOₓ sorbing-and-reducing catalyst upgrades, because the partially-oxidized low-molecular-weight active HC flow into the NOₓ sorbing-and-reducing catalyst.

As for the oxidizing catalyst, it is possible to use oxidizing catalysts comprising loaded catalytic ingredients, such as Pd and Pt, which exhibit good oxidizing activities in low-temperature ranges, or three-way catalysts comprising loaded Pt and Rh. It is often the case that the space between the injector and the turbocharger is small. Accordingly, it is desirable to use honeycomb-shaped oxidizing catalysts in order to inhibit the exhaust pressure loss from enlarging. In this instance, it is preferable as well to provide the inlet-end surface of honeycomb-shaped oxidizing catalysts with an acute angle with respect to a flow of exhaust gases. With such an arrangement, the area of the inlet-end surface contacting with a liquid reducing agent flowing into honeycomb-shaped oxidizing catalysts broadens. The obliquely-cut inlet-end surface can desirably be disposed perpendicularly as much as possible with respect to the direction of exhaust gases flowing into the inlet end of honeycomb-shaped oxidizing catalysts. Consequently, the vaporization efficiency of liquid reducing agents upgrades.

Moreover, as for the vaporization enhancer, it is preferable to use a honeycomb body comprising exhaust gas passages having protrusions. In this instance, exhaust gases and a liquid reducing agent flow through the honeycomb body while contacting with protrusions. Accordingly, a stirring action is effected so that the liquid reducing agent is mixed with the exhaust gases uniformly. Consequently, the heat of the exhaust gases facilitates the vaporization of the liquid reducing agent.

The honeycomb body can desirably exhibit a small heat capacity, and can preferably be made of metals. Moreover, the protrusions produce the advantage when they protrude into the exhaust gas passages of the honeycomb body. For example, German Patent Publication No. 20, 117, 873 U1 discloses a filter. The filter comprises corrugated plates made of a metallic foil, and filtering layers. The corrugated plates and the filtering layers are laminated alternately. The corrugated plates comprise a plurality of claw-shaped holes having a claw-shaped hole vertical diameter. The claw-shaped holes form flow passages comprising inward claw-shaped holes and outward claw-shaped holes. The inward claw-shaped holes and outward claw-shaped holes are disposed so as to form angles with each other. The claw-shaped hole vertical diameter occupies from 100 to 60% of a structural height of the filter so as to assure a degree of fluidic freedom of 20% at least. When using a honeycomb body in which only the corrugated plates disclosed in German Patent Publication No. 20, 117, 873 U1 are laminated, or when using a honeycomb body in which the corrugated plates disclosed in the same and metallic plain plates are laminated alternately, exhaust gases and a liquid reducing agent flow in a diverging manner complicatedly while colliding with the walls (or protrusions) of the inward and outward claw-shaped holes. Accordingly, the stirring efficiency of the liquid reducing agent is enhanced remarkably. Consequently, the vaporization of the liquid reducing agent is furthermore facilitated.

As for the internal combustion engine, it is possible to use gasoline engines, direct-injection gasoline engines, diesel engines, gas engines, and alcohol engines. However, the internal combustion engine is not limited to these. For instance, diesel engines emit exhaust gases containing PMs, and are often operated in a system into which a liquid reducing agent, such as diesel fuel, is added. Moreover, liquid oil contains high-boiling-point HC which are less likely to vaporize. Therefore, the present invention demonstrates the advantages much more remarkably when being applied to diesel engines.

As for the turbocharger, it is possible to use those used conventionally which comprise an outlet member and an inlet member. The outlet member comprises a turbine housing into which exhaust gases flow, and a turbine wheel disposed in the turbine housing. Additionally, the outlet member can further comprise a nozzle vane which controls the opening/closing extent of the turbine housing to change the revolution speed of the turbine wheel appropriately. Moreover, the outlet member comprises a compressor housing into which intake air flows, and a compressor wheel disposed in the compressor housing and rotated by the rotating turbine wheel.

As for the injector, it is possible to use those, such as injection nozzles, actuated by various actuators. In general, it is possible to employ those used conventionally in which the timing and addition of the liquid reducing agent are controlled by electronic control units (hereinafter referred to as "ECU").

As for the liquid reducing agent, it is preferable to use a fuel employed in an internal combustion engine to which the present exhaust gas purifying apparatus is applied. It is possible to exemplify gasoline, and light oil such as diesel fuel.

The NOₓ sorbing-and-reducing catalyst comprises a support, a catalytic ingredient loaded on the support, and an NOₓ sorbing material loaded on the support. It is possible to employ conventionally used NOₓ sorbing-and-reducing catalysts. As for the support, it is possible to use simple substances, such as Al₂O₃, ZrO₂, TiO₂ and CeO₂, or mixtures thereof. Alternatively, it is possible to use a plurality of composite oxides composed of at least two simple substances selected from the group consisting of the above simple substances. As for the catalytic ingredient, Pt can be a representative example, but Rh, Pd and Ir can be used. As for the NOₓ sorbing material, it is possible to use at least one member selected from the group consisting of alkali metals, alkaline-earth metals and rare-earth metals. Note that it is preferable to use an alkali metal and an alkaline-earth metal combinedly.

The NOₓ sorbing-and-reducing catalyst can be either straight-flow-structured NOₓ sorbing-and-reducing catalysts or wall-flow-structured NOₓ sorbing-and-reducing catalysts. For example, the NOₓ sorbing-and-reducing catalyst can be catalysts which are prepared by forming a coating layer on a straight-flow-structured honeycomb-shaped substrate and loading a catalytic ingredient and an NOₓ sorbing material on the resulting coating layer. However, when exhaust gases contain PMs, it is required to dispose a filter for trapping PMs on an upstream side or a downstream side of a flow of exhaust gases with respect to the NOₓ sorbing-and-reducing catalyst. Hence, it is desirable to dispose the NOₓ sorbing-and-reducing catalyst on an upstream side of the flow of exhaust gases, and to dispose a filter on a downstream side of a flow of the exhaust gases with respect to the NOₓ sorbing-and-reducing catalyst. As a result, the NOₓ reducing activity of the NOₓ sorbing-and-reducing catalyst upgrades sharply, because the vaporization enhancer facilitates the gasification of the liquid reducing agent and PMs. In addition, even if PMs should have remained in exhaust gases, it is possible to securely prohibit the emission of PMs because the downstream-side filter traps PMs.

Moreover, as for the NOₓ sorbing-and-reducing catalyst, it is preferable to use filter catalysts which are prepared by forming a coating layer on a surface of the pores in the cellular walls of a wall-flow-structured honeycomb-shaped substrate and loading a catalytic ingredient and an NOₓ sorbing material on the resulting coating layer. By using such filter catalysts, not only it is possible to purify HC, CO and NOₓ and to trap PMs at the same time, but also to purify the trapped PMs by oxidation.

### EXAMPLES

Hereinafter, the present invention will be described in detail with reference to exemplary embodiments and comparative examples.

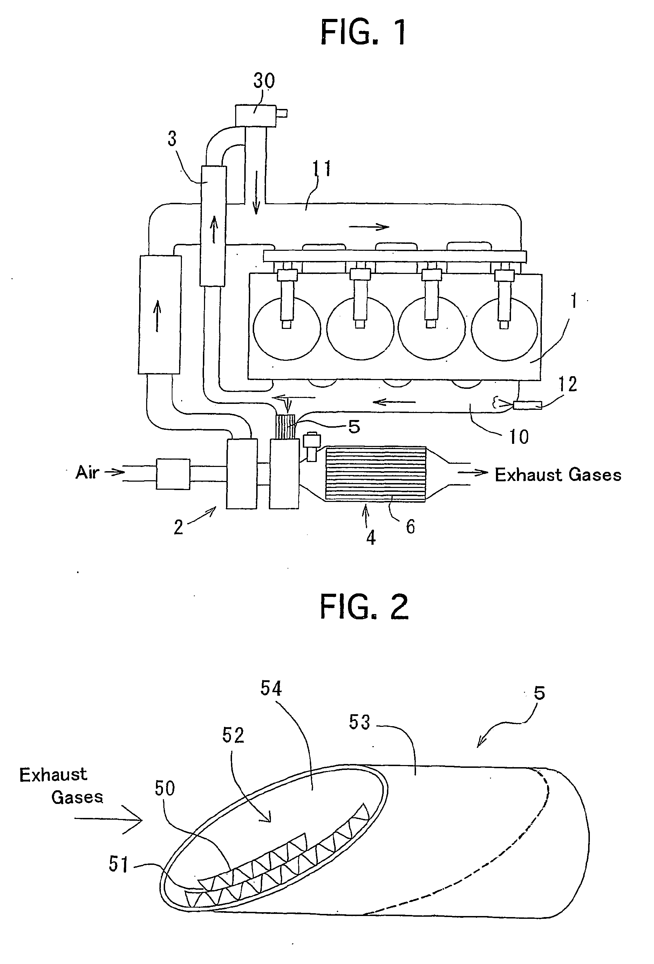

Fig. 1 illustrates an exhaust gas-purifying apparatus according to the present invention. An exhaust system of a direct-injection diesel engine 1 is branched into two flow passages from an exhaust manifold 10. A turbocharger 2 is disposed in one of the flow passages, and an exhaust gas recirculation (hereinafter abbreviated to as "EGR") cooler 3 is disposed in the other one of the flow passages. The exhaust gases emitted from the turbocharger 2 pass through a catalytic converter 4, and are discharged to the outside. On the other hand, the exhaust gases passing through the EGR cooler 3 are returned to an intake manifold 11 while the flow rate is controlled by an EGR valve 30. An injector 12 is installed on an upstream side of the flow of the exhaust gases with respect to the turbocharger 2 so that it can add diesel fuel into exhaust gases. A small honeycomb-shaped oxidizing catalyst 5 is disposed between the injector 12 and the turbocharger 2. Moreover, the catalytic converter 4 is equipped with a filtering NOₓ sorbing-and-reducing catalyst 6.

As illustrated in Fig. 2, the oxidizing catalyst 5 comprises a honeycomb-shaped substrate 52, a coating layer, and Pt. The honeycomb-shaped substrate 52 comprises a metallic plain plate 50 and a metallic corrugated plate 51 which are laminated and wound. Moreover, the honeycomb-shaped substrate 52 has a volume of 24.6 c. c., and is composed of cellular flow passages. The coating layer is formed on a surface of the cellular flow passages of the honeycomb-shaped substrate 52, and comprises 57 parts by weight of an Al₂O₃ powder, 8 parts by weight of a CeO₂ powder and 35 parts by weight of a zeolite powder. The Pt is loaded on the coating layer. In addition, the honeycomb-shaped substrate 52 is accommodated in a metallic mantle 53. The assembly of the honeycomb-shaped substrate 52 and mantle 53 is formed to have an inclined surface 54, which is inclined at an acute angle, for example, 20 degrees, with respect to exhaust gases, at the inlet end. Thus, the oxidizing catalyst 5 contacts with exhaust gases with an enlarged contacting area. Note that the coating layer is formed in an amount of 100 g with respect to 1 L of the honeycomb-shaped substrate 52 and the Pt is loaded in an amount of 5 g with respect to 1 L of the honeycomb-shaped substrate 52. Note that the assembly can be further cut obliquely at the outlet end as designated with the dotted line of Fig. 2, for instance, in order to equalize the resistances of the cellular flow passages and eventually to uniformize the flow of exhaust gases.

The diesel fuel added through the injector 12 passes through the oxidizing catalyst 5 together with exhaust gases. Accordingly, the heat of exhaust gases vaporizes the diesel fuel and partially oxidizes it. Consequently, the vaporization of the diesel fuel is facilitated.

The filtering NOₓ sorbing-and-reducing catalyst 6 comprises a honeycomb-shaped substrate made of cordierite, and a catalytic coating layer. The honeycomb-shaped substrate comprises cellular walls, and cellular passages having opposite ends. Half of the cellular passages are closed at one of the opposite ends in a checkered manner, and the other half of the cellular passages are closed at the other one of the opposite ends in a checkered manner. The catalytic coating layer is formed on a surface of the pores in the cellular walls. Note that the honeycomb-shaped substrate is a wall-flow-structured honeycomb-shaped substrate which is made of cordierite, and whose volume is 2,000 c.c. The catalytic coating layer is formed uniformly within the cellular walls. The catalytic coating layer comprises a coating layer, and Pt, Ba, K and Li which are loaded on the coating layer. The coating layer comprises 56 parts by weight of an Al₂O₃ powder, 56 parts by weight of a ZrO₂-TiO₂ composite oxide powder, 11 parts by weight of a CeO₂-ZrO₂ composite oxide powder, and 27 parts by weight of an Rh/ZrO₂ catalytic powder. Note that the Rh/ZrO₂ catalytic powder comprises ZrO₂ on which Rh is loaded in an amount of 1% by weight. Moreover, the coating layer is formed in an amount of 150 g with respect to 1 L of the honeycomb-shaped substrate. The Pt is loaded in an amount of 3 g with respect to 1 L of the honeycomb-shaped substate. The Ba, K and Li are loaded in an amount of 0.1 mol, 0.1 mol and 0.2 mol, respectively, with respect to 1 L of the honeycomb-shaped substrate.

The filtering NOₓ sorbing-and-reducing catalyst 6 traps PMs contained in exhaust gases into the pores in the cellular walls when exhaust gases pass through the cellular walls, and simultaneously purifies the trapped PMs as well as HC, CO and NOₓ contained in exhaust gases.

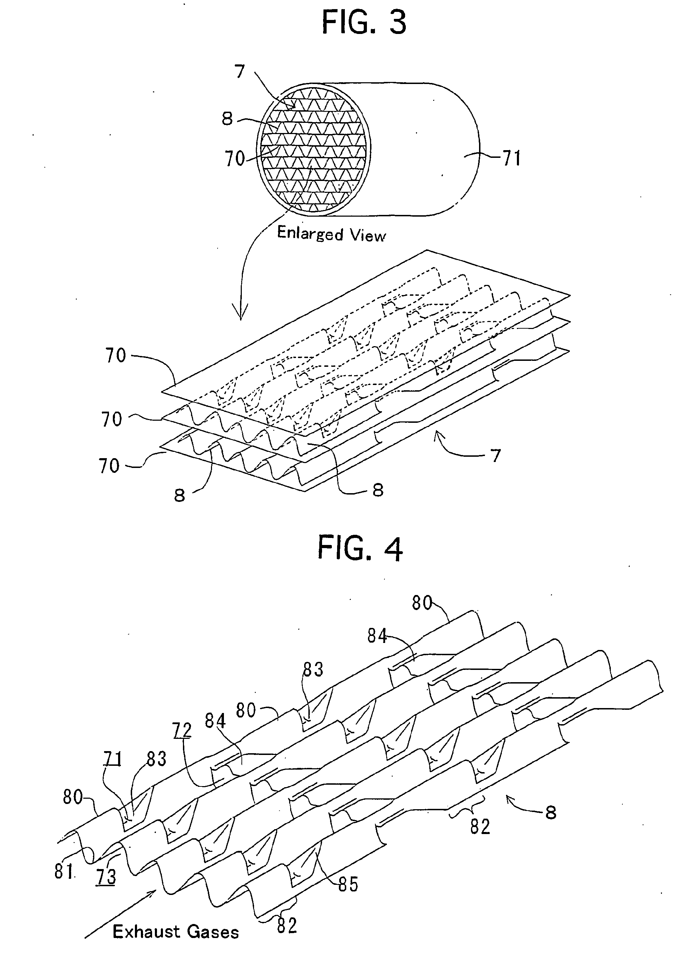

Except that a honeycomb-shaped body 7 illustrated in Fig. 3 is disposed instead of the oxidizing catalyst 5, an exhaust gas-purifying apparatus according to a further Example not forming part of the claimed invention has the same arrangements as those of the exhaust gas-purifying apparatus according to the present invention. Note that the honeycomb-shaped body 7 is made of metal, and has a volume of 24 c.c. Specifically, as illustrated in the drawing, the honeycomb-shaped body 7 comprises corrugated plates 8 illustrated in Fig. 4, and metallic plain plate 70. The corrugated plates 8 and plain plates 70 are laminated one after the other. The resulting sub-assembly of the laminated corrugated plates 8 and plain plates 70 are accommodated in a metallic mantle 71.

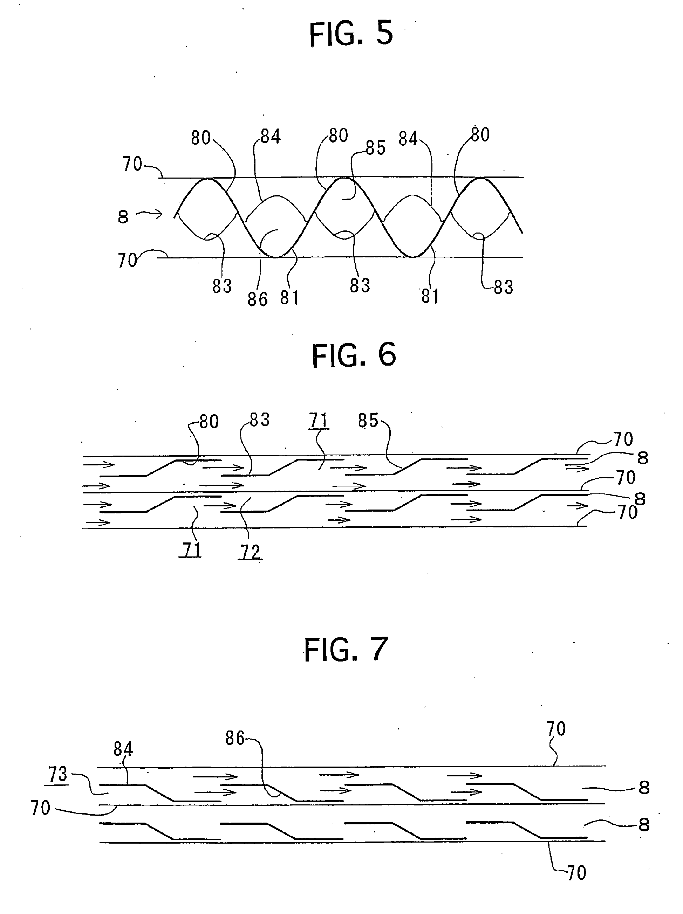

As illustrated in Fig. 4, the corrugated plates 8 of the honeycomb-shaped body 7 comprise wavy ridges 82, secondary roots 83, secondary wavy ridges 82, secondary crests 84, and second secondary roots 83. The wavy ridges 82, secondary roots 83, secondary wavy ridges 82, secondary crests 84 and second secondary roots 83 are formed alternately in this order parallel to a flow direction of exhaust gases. The wavy ridges 82 comprise primary crests 80, and primary roots 81. The primary crests 80 and primary roots 81 are disposed alternately in succession perpendicularly to the flow direction of exhaust gases. The secondary roots 83 are disposed on a downstream side of the flow direction of exhaust gases with respect to the wavy ridges 82, and are disposed next to the primary crests 80 of the wavy ridges 82 in succession. The secondary wavy ridges 82 are disposed on a downstream side of the flow direction of exhaust gases with respect to the secondary roots 83, and are disposed next to the secondary roots 83 in succession. The secondary crests 84 are disposed on a downstream side of the flow direction of exhaust gases with respect to the second wavy ridges 82, and are disposed next to the primary crests 80 of the second wavy ridges 82 in succession. The second secondary crests 83 are disposed on a downstream side of the flow direction of exhaust gases with respect to the secondary crests 84, and are disposed next to the primary crests 80 of the secondary wavy ridges 82 in succession. Note that, as illustrated in Fig. 5, the peaks of the secondary crests 84 have a height lower than that of the peaks of the primary crests 80. The bottoms of the secondary roots 83 have a depth shallower than that of the bottoms of the primary roots 81.

As illustrated in Fig. 6, the secondary roots 83 comprise an inclined surface 85, respectively. The inclined surfaces 85 are disposed on a downstream side of the secondary roots 83 in the flow direction of exhaust gases, and are tapered from wide to narrow upward. Note that the inclined surfaces 85 extend smoothly to the peaks of the neighboring primary crests 80. Moreover, as illustrated in Fig. 7, the secondary crests 84 comprise an, inclined surface 86, respectively. The inclined surfaces 86 are disposed on a downstream side of the secondary crests 84 in the flow direction of exhaust gases, and are tapered from wide to narrow downward. Note that the inclined surfaces 86 extend smoothly to the bottoms of the neighboring primary roots 81.

In the thus constructed honeycomb-shaped body 7, exhaust gases, which are emitted from first passages 71 formed between the primary crests 80 and the lower plain plates 70, flow into second passages 72 formed between the secondary roots 83 and the upper plain plates 70. Note that the inclined surfaces 85 function as the protrusions according to the present invention, because the second passages 72 are closed partially at the downstream-end opening by the inclined surfaces 85 which taper from narrow to wide upward.

The exhaust gases collided with the inclined surfaces 85 flow into the primary roots 81 (see Figs . 4 and 5) which are disposed on both sides of the inclined surfaces 85 in the direction perpendicular to the flow of exhaust gases. Then, as illustrated in Fig. 7, the exhaust gases flow into third passages 73 formed between the secondary crests 84 and the lower plain plates 70. Note that the inclined surfaces 86 also function as the protrusions according to the present invention, because the third passages 73 are closed partially at the downstream-end opening by the inclined surfaces 86 which taper from wide to narrow downward. Moreover, the exhaust gases collided with the inclined surfaces 86 flow into the first passages 71 which are disposed on both sides of the third passages 73 in the direction perpendicular to the flow of exhaust gases.

Thus, the exhaust gases flow in a diverging manner complicatedly while colliding with the inclined surfaces 85, 86. Accordingly, the stirring efficiency of the diesel fuel is enhanced remarkably. The diesel fuel added through the injector 12 contacts with the high-temperature exhaust gases. Consequently, the vaporization of the diesel fuel is furthermore facilitated.

### (Comparative Example No. 1)

Except that the oxidizing catalyst 5 is not disposed, an exhaust gas purifying apparatus according to Comparative Example No. 1 has the same arrangements as those of the exhaust gas purifying apparatus according to the present invention.

### (Comparative Example No. 2)

Except that the oxidizing catalyst 5 is not disposed, and that a honeycomb-shaped oxidizing catalyst is disposed between the turbocharger 2 and the filtering NOₓ sorbing-and-reducing catalyst 6, an exhaust gas-purifying apparatus according to Comparative Example No. 2 has the same arrangements as those of the exhaust gas purifying apparatus according to the present invention.

The honeycomb-shaped oxidizing catalyst disposed between the turbocharger 2 and the filtering NOₓ sorbing-and-reducing catalyst 6 comprises a straight-flow-structured honeycomb-shaped substrate, a coating layer, and Pt. The straight-flow-structured honeycomb-shaped substrate comprises cellular walls, and cellular passages having opposite ends. Note that the straight-flow-structured honeycomb-shaped substrate is made of cordierite, and has a volume is 800 c.c. The coating layer is coated on a surface of the cellular passages of the straight-flow honeycomb-shaped substrate. The coating layer comprises 91 parts by weight of an Al₂O₃ powder, 13 parts by weight of a CeO₂ powder, and 56 parts by weight of a zeolite powder. The Pt is loaded on the coating layer. Note that the coating layer is formed in an amount of 160 g with respect to 1 L of the straight-flow honeycomb-shaped substrate. The Pt is loaded in an amount of 2 g with respect to 1 L of the straight-flow honeycomb-shaped substrate.

### (Test and Evaluation)

Table 1 below summarizes the arrangements of the exhaust gas-purifying apparatuses according to the present invention and the further Example not forming part of the claimed invention and those of the exhaust gas-purifying apparatuses according to Comparative Example Nos. 1 and 2 altogether.

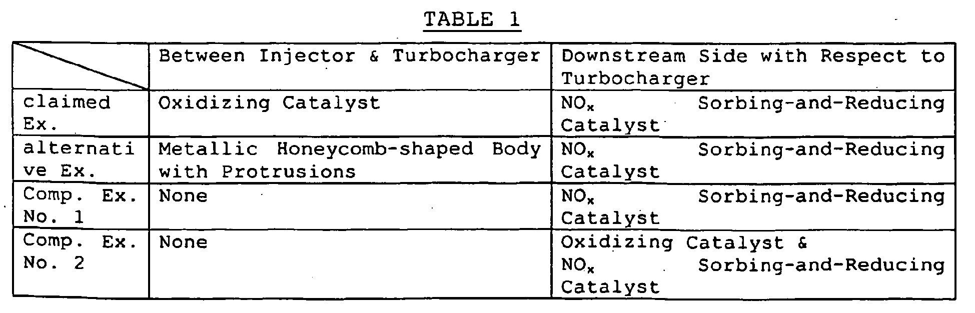

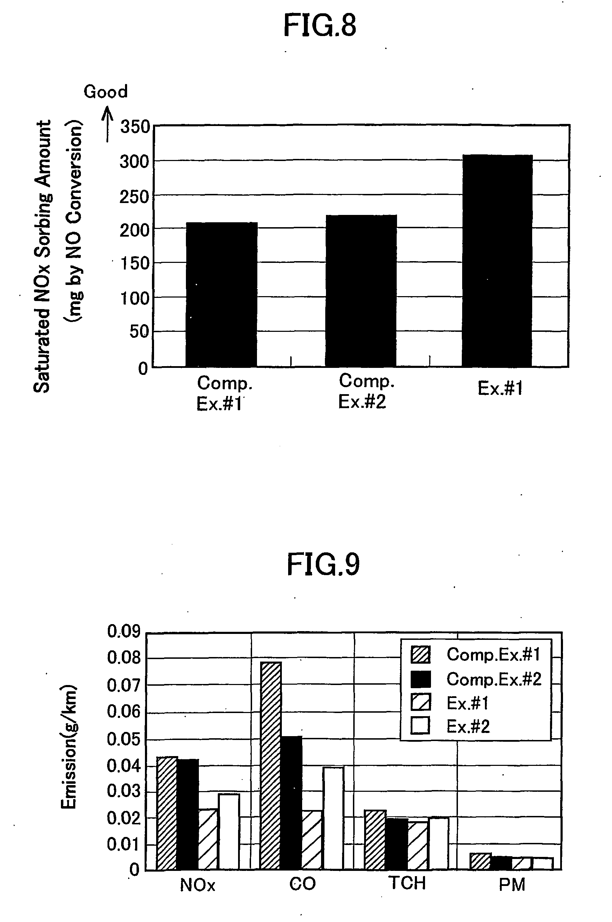

An engine testing bench was prepared which was equipped with a direct-injection common-rail diesel engine whose displacement was 2 L. The exhaust gas-purifying apparatus according to the claimed invention as well as Comparative Example Nos. 1 and 2 were disposed in the exhaust system of the diesel engine, respectively. Then, a durability test was carried out which simulated the 100,000-km driving in the European driving mode. Thereafter, exhaust gases whose temperature was 340 °C were flowed through the exhaust gas-purifying apparatuses while adding 2 c.c. diesel fuel into the exhaust gases through the injector 12 for every 30 seconds. Thus, the exhaust gas-purifying apparatuses were examined for saturated NOₓ sorbing amounts since the diesel fuel additions were completed. Fig. 8 illustrates the thus measured saturated NOₓ sorbing amounts.

It is appreciated from Fig. 8 that the exhaust gas-purifying apparatus according to the present invention exhibited a greater NOₓ sorbing amount than those exhibited by the exhaust gas-purifying apparatuses according to Comparative Example Nos. 1 and 2.

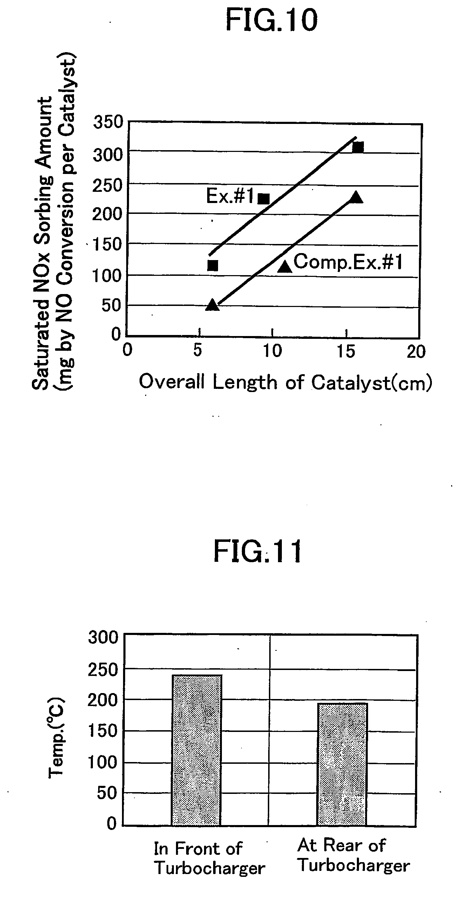

In order to thoroughly investigate causes resulting in the difference, modified versions of the exhaust gas-purifying apparatus according to the present invention in which the overall length of the NOₓ sorbing-and-reducing catalyst 6 was changed variously were prepared, and modified versions of the exhaust gas-purifying apparatus according to Comparative Example No. 1 in which the overall length of the NOₓ sorbing-and-reducing catalyst 6 was changed variously were also prepared. The modified versions were examined for saturated NOₓ sorbing amounts in the above-described manner. Fig. 10 illustrates the thus measured saturated NOₓ sorbing amounts.

It is evident from Fig. 10 that the longer the NOₓ sorbing-and-reducing catalyst 6 was the greater the saturated NOₓ sorbing amount was. However, the NOₓ sorbing-and-reducing catalyst 6 of the exhaust gas-purifying apparatus according to Comparative Example No. 1 hardly demonstrated the NOₓ sorbing capability at the parts over about 5 cm from the inlet end. On the other hand, the NOₓ sorbing-and-reducing catalyst 6 of the exhaust gas-purifying apparatus according to the present invention demonstrated the NOₓ sorbing capability to a certain extent at the same parts. This advantage is believed to result from the facts that the oxidizing catalyst 5 modified the diesel fuel, that the modification facilitated the vaporization of the diesel fuel, that the active modified HC flowed into the filtering NOₓ sorbing-and-reducing catalyst 6 to upgrade the NOₓ purifying capability, and that the oxidizing catalyst 5 facilitated the oxidation of NO.

Moreover, the exhaust gas-purifying apparatuses according to the present invention and the further Example not forming part of the invention as well as Comparative Example Nos. 1 and 2 were disposed in the exhaust system of the aforementioned diesel engine of the engine testing bench, respectively. Then, the diesel engine was driven in a manner simulating the European driving mode. Thus, the exhaust-gas purifying apparatuses were examined for NOₓ, CO, HC and PMs emissions, respectively, per 1-km driving. Fig. 9 illustrates the thus measured NOₓ, CO, HC and PMs emissions.

It is apparent from Fig. 9 that the exhaust gas-purifying apparatuses according to the present invention and the further Example not forming part of the claimed invention exhibited remarkably less NOₓ, CO, HC and PMs emissions than those exhibited by the exhaust gas-purifying apparatuses according to Comparative Example Nos. 1 and 2. The advantages are believed to result from the fact that the vaporization and modification of the diesel fuel were facilitated.

Note that, regarding the temperatures of exhaust gases on the upstream and downstream sides of a flow of exhaust gases with respect to the turbocharger 2 in the 60 km/hour steady driving, it has been found out that the temperature of exhaust gases on the upstream side of the flow of exhaust gases with respect to the turbocharger 2 is higher that the temperature of exhaust gases on the downstream side of the flow of exhaust gases with respect to the turbocharger 2. Therefore, it is believed that the exhaust gas-purifying apparatus according the present invention exhibited less NOₓ, CO, HC and PMs emissions than those exhibited by the exhaust gas-purifying apparatus according to Comparative Example No. 2, because the exhaust gas purifying apparatus according to the present invention comprised the oxidizing catalyst 5 disposed on an upstream side of the flow of exhaust gases with respect to the turbocharger 2 so that the vaporization and modification of the diesel fuel were facilitated.

## Claims

1. An apparatus for purifying an exhaust gas flowing from a diesel engine (1) equipped with a turbocharger (2), comprising:
an injector (12) that injects, as a liquid reducing agent, diesel fuel intermittently into the exhaust gas and is disposed on an upstream side of the turbocharger (12); and
an NOₓ sorbing-and-reducing catalyst (4) disposed on a downstream side of the turbocharger (12);
said apparatus for purifying an exhaust gas flowing from a diesel engine (1) equipped with a turbocharger (2) being **characterized by** further comprising:
a vaporization enhancer that enhances a vaporization of the liquid reducing agent and is disposed between the injector (12) and the turbocharger (2), wherein
the vaporization enhancer comprises an oxidizing catalyst (5), and wherein
the oxidizing catalyst (5) comprises a honeycomb substrate (52) having an upstream end face having an acute angle against a direction of a flow of the exhaust gas in the honeycomb substrate (52).

2. The apparatus according to claim 1, wherein the exhaust gas (71, 72, 73) includes particulate matters.

3. The apparatus according claim 1, wherein the NOₓ sorbing-and-reducing catalyst (4) comprises a wall-flow-structured honeycomb substrate.

## Patentansprüche

1. Vorrichtung zum Reinigen eines Abgases, das aus einem Dieselmotor (1) strömt, der mit einem Turbolader (2) ausgestattet ist, wobei die Vorrichtung folgende Merkmale aufweist:
eine Einspritzdüse (12), die einen Dieselkraftstoff als ein flüssiges Reduktionsmittel intermittierend in das Abgas einspritzt und auf einer stromauf befindlichen Seite des Turboladers (12) angeordnet ist; und
einen NOx-sorbierenden und -reduzierenden Katalysator (4), der auf einer stromabwärtigen Seite des Turboladers (12) angeordnet ist;
wobei die Vorrichtung zum Reinigen eines Abgases, das aus einem Dieselmotor (1) strömt, der mit einem Turbolader (2) ausgestattet ist, **dadurch gekennzeichnet ist, dass** sie ferner aufweist:
eine Verdampfungsverbesserungseinrichtung, die eine Verdampfung des flüssigen Reduktionsmittels verbessert und zwischen der Einspritzdüse (12) und dem Turbolader (2) angeordnet ist, wobei
die Verdampfungsverbesserungseinrichtung einen Oxidationskatalysator (5) aufweist, und wobei
der Oxidationskatalysator (5) ein Bienenwabensubstrat (52) mit einer stromauf befindlichen Endfläche aufweist, die einen spitzen Winkel gegenüber einer Strömungsrichtung des Abgases in dem Honigwabensubstrat (52) aufweist.

2. Vorrichtung nach Anspruch 1, wobei das Abgas (71, 72, 73) Partikel beinhaltet.

3. Vorrichtung nach Anspruch 1, wobei der NOₓ-sorbierende und -reduzierende Katalysator (4) ein Honigwabensubstrat mit einer Wandströmungsstruktur aufweist.

## Revendications

1. Appareil de purification des gaz d'échappement provenant d'un moteur diesel (1) équipé d'un turbocompresseur (2) comprenant:
un injecteur (12) qui injecte, en tant qu'agent réducteur de liquides, du carburant diesel de manière intermittente dans les gaz d'échappement et est disposé sur un côté amont du turbocompresseur (12); et
un catalyseur (4) de sorption et de réduction des NOₓ disposé sur un côté aval du turbocompresseur (12);
ledit appareil de purification des gaz d'échappement provenant d'un moteur diesel (1) équipé d'un turbocompresseur (2) étant **caractérisé par** le fait de comprendre en plus:
un amplificateur de vaporisation qui améliore la vaporisation de l'agent réducteur de liquides et est disposé entre l'injecteur (12) et le turbocompresseur (2), où l'amplificateur de vaporisation comprend un catalyseur d'oxydation (5), et où le catalyseur d'oxydation (5) comprend un substrat (52) en nid d'abeille ayant une face d'extrémité amont ayant un angle aigu par rapport à une direction d'écoulement des gaz d'échappement dans le substrat (52) en nid d'abeille.

2. Appareil selon la revendication 1, dans lequel les gaz d'échappement (71, 72, 73) comportent des matières particulaires.

3. Appareil selon la revendication 1, dans lequel le catalyseur (4) de sorption et de réduction des NOₓ comprend un substrat en nid d'abeille à structure d'écoulement sur les parois.
